# EUROPEAN PATENT APPLICATION

(11) **EP 4 844 707 A1**
(43) Date of publication of application: **25.11.2026**
(21) Application number: 25178498.9
(22) Date of filing: 23.05.2025
(51) Int. Cl.: G06V 20/64, G06V 10/82

(54) **PROPAGATION METHOD FOR DETERMINING DEPTH ESTIMATION**

(71) Applicant: TOYOTA JIDOSHA KABUSHIKI KAISHA, Toyota-shi, Aichi-ken 471-8571 (JP); ETH Zurich, 8092 Zürich (CH)
(72) Inventor: ABBELOOS, Wim, 1140 BRUSSELS (BE); PICCINELLI, Luigi, 8092 ZURICH (CH); WANDEL, Thiemo, 8092 ZURICH (CH); SAKARIDIS, Christos, 8092 ZURICH (CH); VAN GOOL, Luc, 8092 ZURICH (CH)
(74) Representative: Cabinet Beau de Loménie

(57) **Abstract**

A propagating method for depth estimation on video frames based on a predefined encoder-decoder model, the method comprising the following steps:
a. obtention of at least:
- depth features determined in relation with a previous frame of a video frames;
- a current frame which temporally follows the previous frame; and
- an optical flow estimation which estimates relative motion between the previous frame and the current frame;

b. generation of warped depth features of the previous frame by applying a warping function to the depth features of the previous frame using the optical flow estimation;
c. extraction of features from at least the current frame;
d. determination of depth features of the current frame by correcting the warped depth features of the previous frame using residual correction determined from the extracted features and the depth features of the previous frame in view of the optical flow estimation.

## Description

### BACKGROUND OF THE INVENTION

### 1. Field of the invention

The present disclosure relates to depth estimation from videos, and particularly for real-time applications.

### 2. Description of Related Art

Depth estimation is a fundamental task in computer vision, which notably enables a dense perception of the geometric structure of a surrounding scene that is pivotal in a vast variety of applications ranging from autonomous systems and robotics to augmented reality and medicine.

Existing methods either rely on frame-by-frame monocular models, also called monocular depth estimation (MDE), or on computationally demanding temporal models such as test-time optimization, full temporal attention, or video diffusion.

Monocular depth estimation refers to computer vision task wherein depth information of a scene from a single image is predicted, thus ignoring inherent temporal coherence in videos. While MDE models are particularly simple and require few computational resources, they lead to temporal inconsistencies and inaccuracies.

Some models remedy to these inconsistencies and/or inaccuracies by considering priors information. For example, offline existing methods leverage all frames of a video in order to determine depth estimation. However, these methods require significant memory consumption. Furthermore, such methods generally use correlation between frames, past and future, determining therefore relative depth information, not metric depth estimation, let alone their inability to perform real-time estimation. On the other hand, online existing methods, generally based on recurrent neural networks, allow to retain past features but suffer from drift, vanishing gradients, and poor capacity-efficiency tradeoff, which limits effectiveness on real-time and long sequences.

There is a need for a method computationally efficient, providing depth estimation temporally stable, and more accurate across the frames of a video, and which may be performed for real-time applications.

The following references disclose various methods related to depth estimation:
- [REF1] Aleksei Bochkovskii, et al. "Depth pro: Sharp monocular metric depth in less than a second". arXiv preprint arXiv:2410.02073, 2024;
- [REF2] Yiran Wang, et al. « Neural video depth stabilizer". In Proceedings of the IEEE/CVF International Conference on Computer Vision (ICCV), pages 9466-9476, 2023;
- [REF3] Luigi Piccinelli, et al. « UniDepthV2: Universal monocular metric depth estimation made simpler." arXiv:2502.20110, 2025;
- [REF4] Haokui Zhang, et al. « Exploiting temporal consistency for real-time video depth estimation". In Proceedings of the IEEE/CVF International Conference on Computer Vision (ICCV), 2019.

### SUMMARY

In view of the above problem, the main purpose of the present disclosure is to provide a method which efficiently and accurately determines depth estimation across video frames, in particular on real time.

In this respect, the present disclosure relates to a computer-implemented depth-related information propagating method for depth estimation on video frames based on a predefined encoder-decoder model, the encoder being configured to provide depth features from a frame, whereas the decoder is configured to provide depth prediction from depth features as issued by the encoder, the method comprising the following steps:
a. An obtaining step comprising the obtention of at least:
   - depth features determined in relation with a previous frame of a video frames;
   - a current frame, which temporally follows the previous frame; and
   - an optical flow estimation which estimates relative motion between the previous frame and the current frame;
b. A generating step comprising the generation of warped depth features of the previous frame by applying a warping function to the depth features of the previous frame using the optical flow estimation;
c. An extracting step comprising the extraction of features from at least the current frame;
d. A determining step comprising the determination of depth features of the current frame by correcting the warped depth features of the previous frame using residual correction determined from the extracted features and the depth features of the previous frame in view of the optical flow estimation.

The method enables to determine, based on the determination and propagation of the depth features, the depth estimation of each frame.

At this end, the propagating method may further comprise an estimation step of determining depth prediction of the current frame by providing depth features of the current frame to the decoder of the predefined encoder-decoder model.

The propagating method may advantageously be performed in real-time.

A main application of the present disclosure is for use in computer vision applications such as autonomous systems, robotics, augmented reality, or medicine.

However, the present disclosure can more broadly be applied to any application involving depth estimation from successive frames, whether online or offline.

In such a method, the combined use of features extraction, of optical flow estimation and estimation of depth features rather than directly depth estimation makes it possible to efficiently and accurately provide depth features of a current frame, and thus depth estimation, without the need for costly computation.

By "frame" is understood an acquisition result of an image acquisition system at a given time. Commonly, an image acquisition system captures frames at a predetermined frequency measured in frames per second (fps).

By "feature" is understood deep features corresponding to essential patterns and information extracted from the frame, conventionally determined by convolutional or attention layers.

By "feature extraction" (in a frame) is understood the identification of the pixels or regions of the frame exhibiting a predetermined feature (among possibly a set of a plurality of characterizing features). This feature may for example be that the color of the pixel has a certain value or is within a certain range, it can be the presence of a pattern such as an edge, etc... Feature extraction may be performed using a CNN model. In particular, feature extraction may be performed using at least one backbone layer. A Convolutional Neural Network (CNN) is known in the art as a class of artificial neural network.

By "depth estimation" or "depth prediction" is understood the measurements of the distance of each pixel of a frame relative to the acquisition system from which the frame is acquired. The depth estimation may be relative or metric information. Preferably, depth predictions of the invention are metric depth predictions.

The method is in particular designed to determine depth estimation in real time. Therefore, the chronology of the frames is based on time chronology (that is, each frame is time-stamped). For this reason, "successive" means "chronologically successive", "subsequent" means "chronologically subsequent", "previous" means "chronologically previous", "earlier/earliest" means "chronologically earlier/earliest", "prior to" means "chronologically prior to". However, it is understood that the present method may also be applied for depth estimation not in real-time or even chronologically backwards by simply inverting the order of frames.

Residual correction may be determined by a residual network, namely ResNet.

By "warping" is here understood reversible distortion of the frame.

By warping the previous features using optical flow estimation for a previous frame, the warped features can be distorted to be close to the current frame. This enables the estimation of the current features based on the previous features.

The method may further comprise a refining step of refining the optical flow estimation, especially by using a light-weight convolutional network.

The method may be performed repeatedly for each frame subsequent to the current frame, with the current features corresponding to the previous features of the directly successive frame, and so on. The method is advantageously recursive.

The depth features of the previous frame may be either obtained by submitting the previous frame to the encoder of the predefined encoder-decoder model or by applying the propagating method of the invention in which the previous frame corresponds to the current frame.

When depth features of the previous frame are determined by submitting the previous frame to the encoder, said frame is called "keyframe".

In particular embodiments, only the first frame of a video, for which no depth features of a previous frame are known, is determined by using the predefined encoder-decoder.

In particular embodiments, besides the first frame of a video, depth features of the previous frame may be obtained by submitting the previous frame to the encoder of the predefined encoder-decoder model only when a condition is met.

The condition may be a predetermined number of frames between two keyframes.

Preferably, the condition is based on the optical flow estimation, eventually refined, and on the warping function.

The method may comprise a re-initializing step performed only when the condition based on the optical flow estimation, eventually refined, and on the warping function is met, the re-initializing step comprising recalculation of the depth features of the previous frame, and, if applicable, of the depth prediction of the previous frame, by using the encoder of the predefined encoder-decoder model.

The number of keyframes on a video is less than 25% of the frames, preferably less than 10%, more preferably less than 5%.

In some embodiments, the obtaining step also comprises the obtention of depth prediction of the previous frame generated by providing the depth features of the previous frame to the decoder of the predefined encoder-decoder model; the generating step also comprises the generation of warped depth predictions by applying the warping function to the depth prediction using the optical flow estimation, possibly refined; and the extracting step also comprises the extraction of features from the warped depth prediction, the extracted features being a fusion of at least the features extracted from the current frame and of the features extracted from the depth prediction.

Additionally, or alternatively, the extracting step comprises extracting features from the optical flow estimation, possibly refined, the extracted features being a fusion of at least the features extracted from the current frame and of the features extracted from the optical flow estimation, and, if applicable, of the features extracted from the depth prediction, preferably the fusion being performed using a gating mechanism.

The gating mechanism allows to improve propagation by guiding selection of reliable features and preventing incorrect propagation, notably in regions where the optical flow estimation may be unreliable.

More generally, gating mechanism may be applied to different steps of the invention. For example, gating mechanism may be applied to the warped depth features of the previous frame, to the features extracted from the warped depth prediction of the previous frame, and/or to the features extracted from the current frame.

The depth features may be multi-resolution features, depending on the encoder-decoder model used. In that case, the method comprises encoding the extracted features so as to obtain multi-resolution extracted features, the determining step being applied to each resolution independently of each other.

The invention also relates to a computer program set including instructions for executing the steps of the propagating method of the invention when said program set is executed by at least one computer.

The invention also relates to a recording medium readable by at least one computer and having recorded thereon at least one computer program including instructions for executing the steps of the propagating method of the invention.

Correlatively, the invention also concerns a computer-implemented training method for a propagation module based on an already trained encoder-decoder model, the propagation module being configured to implement the propagating method of the invention, the training method comprising the following steps:
- determining at least depth features of a first frame of a succession of frames over a temporal dimension by submitting the first frame to the encoder of the already trained encoder-decoder model;
- determining frame-wise depth features by submitting each frame of the succession of frames following the first frame to the propagation module;
- optionally, determining frame-wise depth predictions by submitting the frame-wise depth features to the decoder of the already trained encoder-decoder model;
- comparing frame-wise features with ground-truth frame-wise depth features, and optionally comparing frame-wise predictions with ground-truth frame-wise depth estimations;
- updating the propagation module based on said comparison(s).

The comparison may further comprise computing a consistency loss based on metric radial distance between 3D points of each consecutive frames of the succession of frames, the frames being RGB frames and the already trained encoder-decoder model being a model that infers 3D points from RGB frame of video frames,

Temporal flip augmentation may alternatively or additionally be performed on the succession of frames, the steps being performed on both the succession of frames and the temporal-flipped succession of frames.

The invention also relates to a computer program set including instructions for executing the steps of the training method of the invention when said program set is executed by at least one computer.

The invention also relates to a recording medium readable by at least one computer and having recorded thereon at least one computer program including instructions for executing the steps of the training method of the invention.

The invention also relates to an electronic device configured to implement a propagating method of the invention or a training method of the invention.

The electronic device may comprise acquisition means to acquire frames from video frames, possibly with conversion means allowing to convert bitstream video into video frames.

The electronic device may also comprise at least one or more processor(s) and at least one memory storing instructions which, when executed by the processor(s), cause the device to perform the steps of the propagating or training method.

As used herein, the term "processor" is intended to refer broadly to any processing unit capable of executing instructions, including but not limited to a central processing unit (CPU), a microprocessor, a microcontroller, a digital signal processor (DSP), a graphics processing unit (GPU), or any combination thereof. The processor(s) may be part of a system-on-chip (SoC) or may be implemented as separate components. The memory may comprise volatile and/or non-volatile memory, such as RAM, ROM, flash memory, or other suitable storage technologies.

In some embodiments, the electronic device may also include one or more input/output interfaces or communication modules for exchanging data with external systems.

The invention allows exploiting prior information in an efficient way. In particular, determining depth features and not directly depth predictions reduces computational cost, especially due to limited use of the encoder. In addition, the determination of a residual correction between the depth features of the previous frame and the features extracted from at least the current frame, combined with the optical flow estimation, even if of poor quality, makes it possible to quickly and simply evaluate the changes that have occurred between two successive frames, and thus provides a temporally consistent and accurate method.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a general diagram of depth estimation method using propagation module in accordance with the present disclosure.
- FIG.2 is an example of propagation module implementing a propagating method according to the invention
- FIG.3 is another example of propagation module implementing a propagating method according to the invention.
- FIG.4 is a general diagram of a propagating method according to the method of the invention.
- FIG.5 is a general diagram of a propagating method according to the method of the invention.
- FIG.6 is a general diagram of a training method to train a propagation module according to the invention;
- FIG.7 is an example of a hardware architecture of a propagation module according to the invention;
- FIG.8 to 12 are tables illustrating performance indicators of the method of the invention.

### DETAILED DESCRIPTION OF EMBODIMENTS

Reference will now be made in detail to a depth-related information propagating method 100 for depth estimation on video frames constituting an exemplary embodiment of the present disclosure.

A propagating method will be described between a previous frame Iₜ₋₁ and a current frame It of a series of source frames acquired at successive time t₀, ..., t-1, t steps over a time period, wherein the current frame It is a frame subsequent to the previous frame Iₜ₋₁.

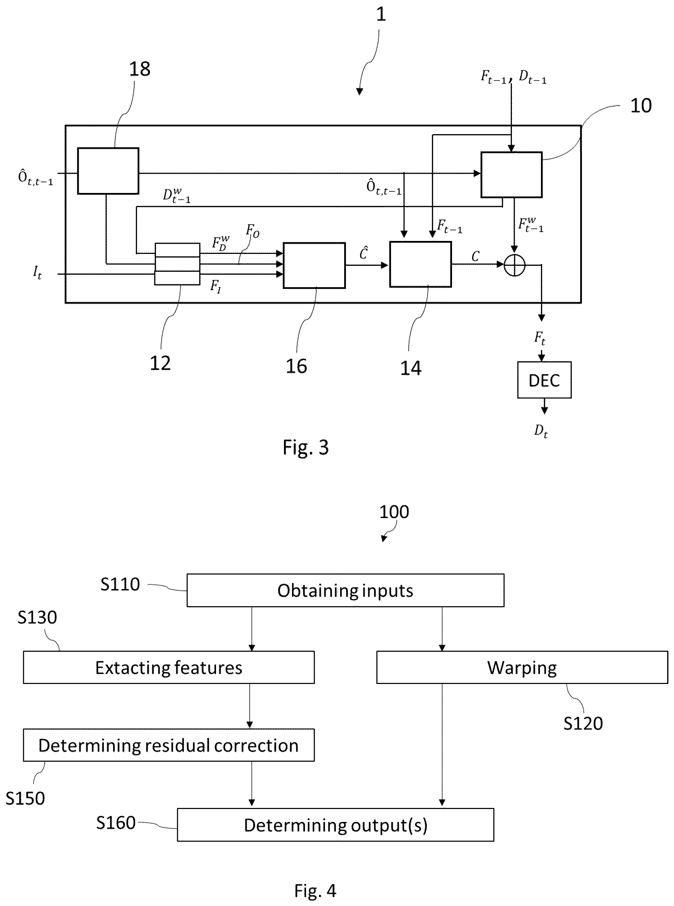

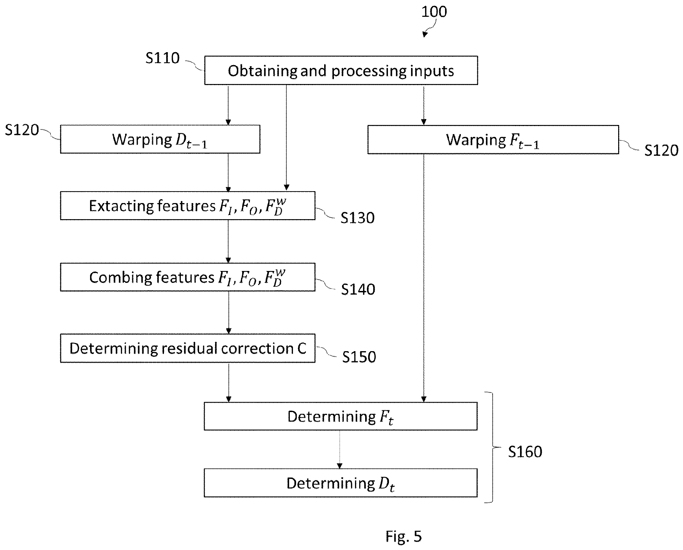

Figures 4 and 5 illustrate two examples of implementation of the method 100.

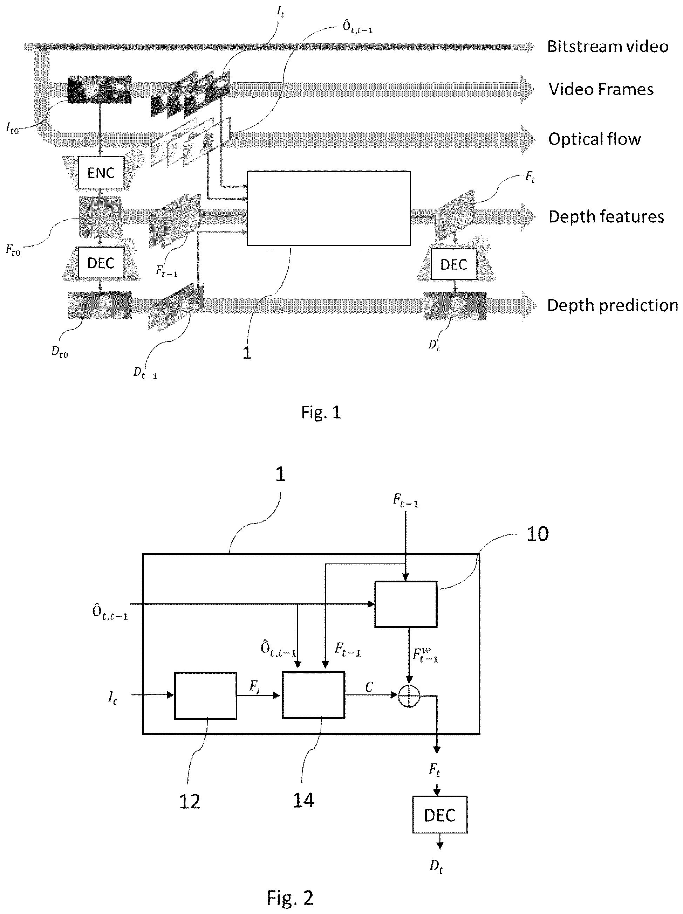

The propagating method 100 may be implemented by a propagation module 1 as illustrated Figures 2 and 3.

Figures 2 and 3 schematize examples of propagation module 1 configured to implement the methods of Figures 4 and 5 respectively.

Figure 1 illustrates the application of a propagation module 1 according to the invention to a frame It of a video, online, the video being composed of a plurality of video frames Iₜ₀, ... Iₜ over a time period.

The propagating method is performed in relation to a predefined encoder-decoder model comprising one encoder ENC configured to generate depth features from a frame, and one decoder DEC configured to generate depth prediction from depth features.

Depending on the encoder used, the depth features may be multi-resolution depth features, depth features may therefore be defined as follows: *Fₜ =* Σ_{*i*∈}*_{N} F_{i,i},* with N the number of resolutions.

The encoder-decoder model is predefined and already trained.

The encoder-decoder model is frozen.

An initialization step is applied to the first frame Iₜ₀ of the video frames during which the first frame is submitted to the encoder providing depth features Fₜ₀ of the first frame. The depth features of the first frame may then be submitted to the decoder to generate depth predictions Dₜ₀ of the first frame.

The depth features Fₜ, _{t>0} of each of the following frames Iₜ, _{t>0} are then determined successively by the propagating module implementing the propagating method.

The propagating method makes it possible to determine depth features similar as those that would have been obtained using the encoder ENC. The method thus makes it possible to determined depth predictions for frames of video frames using almost exclusively the decoder DEC, requiring only few uses of the encoder ENC. Reducing the use of the encoder ENC enables a considerable reduction in calculation costs.

More generally, the method exploits the redundancies present on the frames of a video and the ability of motion vectors and residual coefficients to efficiently capture differences between frames.

The encoder-decoder model may be any MDE model, in particular any metric MDE model. For example, the encoder-decoder model may be as described in [REF 3]. This is not limitative.

The method 100 comprises the main steps:
- S110 of obtaining inputs comprising at least depth features Fₜ₋₁ of the previous frame, optical flow estimation Ô_{t,t-1} and the current frame It,
- S120 of warping at least depth features of the previous frame,
- S130 of extracting at least features from the current frame,
- S150 of determining residual correction, and
- S160 of determining output, the output comprising at least depth features of the current frame.

### Step 110:

### Optical flow estimation

The optical flow estimation estimates relative motion between the previous frame Iₜ₋₁ and the current frame It.

The optical flow estimation may be computed using Dense Inverse Search Algorithm as described in Till Kroeger et al. "Fast optical flow using dense inverse search", Proceedings of the European Conference on Computer Vision (ECCV), 2016 ([REF 5]). However, other methods may be alternatively applied such as motion vectors or high-quality predicted optical flow as for example described in Yihan Wang et al. "Sea-raft: Simple, efficient, accurate raft for optical flow" arXiv preprint arXiv:2405.14793,2024 ([REF 6]).

An optional step of refining the optical flow estimation may be done further to step S110 and prior to step S120.

The optical flow estimation may be refined using a light-weight convolutional network, comprising for example two layers.

Refining the optical flow estimation may enable denoising and sharpening initial optical flow. The refinement may be particularly beneficial for low-resolution feature space warping.

In the following, the term "optical flow estimation" refers to either the refined optical flow estimation or the optical flow estimation. In other words, when the method comprises a refining step, "optical flow estimation" refers to the "refined optical flow estimation", particularly in the use of the warping function, in the extracting step, and in gating mechanism.

### Depth features

The depth features Fₜ₋₁ may either be determined by submitting the previous frame Iₜ₋₁ to the encoder ENC or by a previous implementation of the method.

In particular, when the previous frame It is the first frame of the video frames, the depth features of the previous are determined by submitted the previous frame Iₜ₋₁ to the encoder ENC.

The obtention of the depth features may comprise an optional step of recalculating depth features of the previous frame by submitting the previous features to the encoder when a condition is met.

The condition may be based on the optical flow estimation and on the warping function is met.

When depth features of the previous frame are determined by submitting the previous frame Iₜ₋₁ to the encoder ENC, said frame is called "keyframe".

The condition may be defined such as to verify whether the input frames remain stable across the time to propagate priors. This allows to ensure efficient propagation.

The condition may comprise verifying that magnitude of the optical flow estimation does not exceed a first predefined threshold.

The condition may comprise verifying that a difference metric based on the warping function does not exceed a second predefined threshold which may be different from the first predefined threshold.

The first predefined threshold and/or the second predefined threshold may be based on an indicator decreasing as a function of time. More particularly, the indicator may decrease with the increase of the size of the sequences of frames. A sequence of frames means all the frames since the last keyframe, the number of frames may include the keyframe.

This enables to balance efficiency and robustness for long sequences of frames.

The condition is for example defined as follows: ∥*w*(1_{*H*×*W*}, Ô_{*t*,*t-*1})∥₁ ≤ 0.2 × 0.9*^{t}*V∥*Ô*_{*t,t-*1}∥₁ ≥ 0.15 × 0.9*^{t}* + 0.1, where 1_{HxW} is a HxW matrix of ones, w(x,y) denotes warping x using the flow y, ∥.∥₁ is a norm, for example ${\left‖x\right‖}_{1} = \frac{1}{HW} {\sum }_{i , j} {\left‖{x}_{ij}\right‖}_{2}$, and t is the count of frames since the last one calculated by submission to the encoder ENC.

Depth features may comprise a plurality of components depending on the encoder used. In other words, the encoder may involve multi-resolution. In this case, each component of the depth features of the previous frame are considered separately from each other to determine each component of the depth features of current frame respectively.

### Depth prediction

In some embodiments, the step S110 also comprises obtaining depth prediction Dₜ₋₁ of the previous frame.

The depth prediction may be seen as a map representing the distance of each pixel relative to the camera in relation with a frame.

The depth prediction Dₜ₀, ..., Dₜ₋₁, Dₜ of a frame is obtained by providing depth features of said frame to the decoder DEC.

A decoder DEC may be included in the propagation module 1.

Depth prediction acts as geometric prior improving consistency over time.

### Step 120:

The step S120 comprises at least the warping of the depth features Fₜ₋₁ of the previous frame using the optical flow estimation Ô_{t,t-1}, preferably refined, to obtain warped depth features Fₜ₋₁^{w}.

The step S120 may also comprise the warping of the depth prediction Dₜ₋₁ of the previous frame when obtained at the step S110, warped depth prediction being denoted Dₜ₋₁^{w}.

### Step 130:

The step S130 comprises at least the extraction of features F_{I} from the current frame It.

The step S130 may also comprise the extraction of features F_{O} from the optical flow estimation, refined when refining is applied to the optical flow estimation.

When depth prediction Dₜ₋₁ of the previous frame is obtained at step S110, the step S130 also comprises the extraction of features F_{D}^{w} from the warped depth prediction Dₜ₋₁^{w}.

Preferably, the step S130 comprises the extraction of features F_{I} from the current frame It, the extraction of features F_{O} from the optical flow estimation, and the extraction of features F_{D}^{w} from the warped depth prediction Dₜ₋₁^{w}.

Extraction of features F_{I}, F_{O}, F_{D}^{w} from any of the optical flow estimation, current frame and warped depth prediction may be determined by using any known feature-extracting network.

For example, extraction of features F_{O} from optical flow estimation may be determined by using two backbone layers neural network whereas extraction of features F_{I}, F_{D}^{w} from current frame and from warped depth predictions may be determined by using at least one backbone layer neural network.

### Step 140:

When step S130 comprises the extraction of at least features from the warped depth prediction and/or features from the optical flow estimation, the method 100 comprises a step S140 of combining the extracted features F_{I}, F_{O}, F_{D}^{W}.

Preferably combining the features comprises gating mechanism, in particular the gating mechanism being based on the features extracted from the optical flow estimation Fo.

Combining the extracted features is for example performed as follows: $\hat{C} = {F}_{I} + {G}_{D} ⊙ {F}_{D}^{w} + Lin \left({F}_{O}\right)$, where G_{D} is a gating mechanism, Lin refers to a linear layer, ⊙ represents elementwise multiplication.

The gating mechanism may be computed as *G_{D} = σLin*((*F_{O}*))*,* where σ indicates an activation function.

When depth features involve multi-resolution, the fused extracted features *Ĉ* are submitted to an encoder in order to generate multi-resolution fused extracted features *Ĉ =* {*Ĉᵢ*}_{*i*∈}*_{N},* with N the number of resolutions, then each resolution are processed independently from each other.

### Step 150:

Based on the extracted features, in view of the optical flow estimation and of the depth features of the previous frame, a residual correction C is determined.

The residual correction may be determined by using a residual network (ResNet) preferably using a gating mechanism based on the optical flow estimation, preferably on the bottleneck of the ResNet.

Such determination of the correction C at the feature level than directly at the depth prediction level enables to taking advantage of a more expressive feature representation and of the decoder.

For example, the correction C may be computed as follows: *C* = *Conv*(*Ĉ*∥*F*_{*t-*1}, *G_{F}*) with G_{F} the gating mechanism and Conv a ResNet.

G_{F} may be computed as follows: *G_{F} = σ*(*MLP*(*F_{O}*)) where σ indicates an activation function and MLP a multilayers perceptron.

In case of multi-resolution, step S150 is performed for each resolution i belonging to N, a residual correction Cᵢ being determined for each resolution in relation to the corresponding depth features F_{i,t-1} of the previous frame.

### Step 160:

A step S160, output is determined.

The output comprises at least depth features Fₜ of the current frame which are determined from the warped depth features Fₜ₋₁^{w} of the previous frame and the residual correction C.

In case of multi-resolution, step S160 is performed for each resolution i belonging to N, F_{i,t} being determined from the corresponding residual correction Cᵢ and the corresponding depth features F_{i,t-1}^{w} of the previous frame.

In particular, warped depth features Fₜ₋₁^{w} are corrected based on the residual correction C.

For example, Ft= C + Fₜ₋₁^{w}.

Depth prediction Dt of the current frame may be obtained by submitting depth features Fₜ of the current frame to the decoder DEC.

The propagation module 1 is configured to implement the propagating method.

The propagation module 1 may have the hardware architecture of a computer and comprises one or more processor(s) 41, a random access memory 42, a read-only memory 43 and a non-volatile memory 44. It also comprises communication means 45.

The read-only memory constitutes a storage medium according to the invention, readable by said one or more processor(s) and on which is stored a computer program PROG comprising instructions for executing steps of the propagating method.

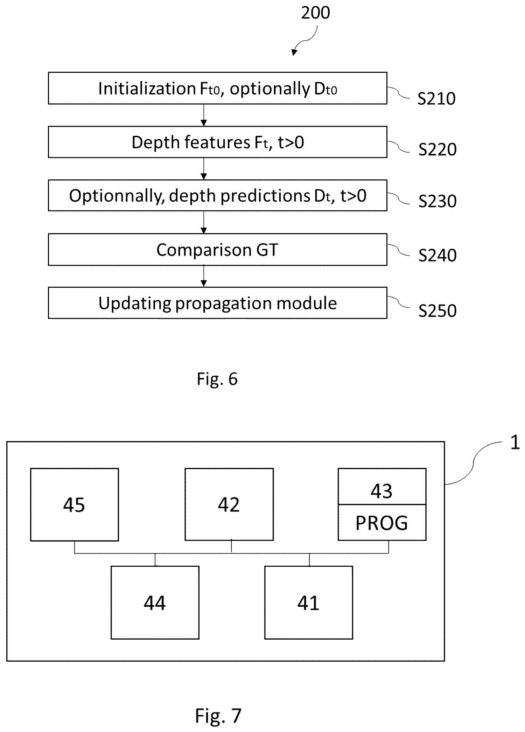

In addition, although the hardware architecture is represented on Figure 7 in a single box, it may be a distributed calculation system, comprising a plurality of processors, possibly physically arranged on different locations.

As illustrated Figure 2, the propagation module 1 may comprise:
- warping submodule 10 configured to implement step S120;
- extraction features submodule 12 configured to implement step S130;
- residual correction submodule 14 configured to implement step S150,
- a submodule shown as an addition sign configured to determine the depth features of the current frame by computing compute the addition of the warped depth features Fₜ₋₁^{w} of the previous frame and the residual correction C.

As illustrated Figure 3, the propagation module may further comprise:
- fusion submodule 16 configured to implement step S140; and/or
- refining submodule 18 configured to refine the optical flow estimation.

The invention also deals with a system comprising an encoder-decoder model and a propagation module allowing to determine depth estimation for a whole time series of frames.

The invention also refers to a training method 200 for training a propagation module 1 of the invention.

The computer-implemented training method is based on an already trained encoder-decoder model which is frozen, the training method comprising the following steps: for at least one video comprising a succession of frames over a temporal dimension:
- step S210: determining at least depth features of a first frame of the succession of frames by submitting the first frame to the encoder of the already trained encoder-decoder model;
- step S220: determining frame-wise depth features by submitting each frame of the succession of frames following the first frame to the propagation module;
- step S230: optionally, determining frame-wise depth predictions by submitting the frame-wise depth features to the decoder of the already trained encoder-decoder model;
- step S240: comparing frame-wise features with ground-truth frame-wise depth features, and optionally comparing frame-wise predictions with ground-truth frame-wise depth estimations;
- step S250: updating the propagation module based on said comparison(s).

Preferably, the least at one video comprises a plurality of videos, each comprising a succession of frames over a temporal dimension.

On some embodiments of the invention, submodules of the propagation module may be trained separately from each other, requiring access to or determination of ground truth output for each submodule and for each frame.

The step S220 may therefore comprise determining frame-wise refined optical flow estimation in order to supervise training of the refining submodule, step S240 comprising comparison with ground truth refined optical flow estimation.

The step S220 may comprise determining frame-wise warped depth features and/or frame-wise warped depth prediction in order to supervise training of the warping submodule, step S240 comprising comparison with ground truth warped depth features and/or ground truth warped depth predictions.

The step S220 may comprise determining frame-wise residual correction in order to supervise training of the residual correction submodule, step S240 comprising comparison with ground truth residual correction.

The step S220 may comprise determining frame-wise extracted features in order to supervise training of the extraction features submodule, step S240 comprising comparison with ground truth extracted features.

The training method may comprise one or more of the following loss functions.

The updating step may comprise the computation of a gradient from each of the one or more loss functions.

Loss functions may supervise one or more of depth predictions, depth features, refined optical flow estimations, residual correlations.

In particular, the consistency between consecutive frames may be enforced through a consistency loss based on a metric radial distance between 3D points of each consecutive frames of the succession of frames. Such consistency loss may be computed as follows: *L_{con}*(*t -* 1*, t*) = ∥*w*(∥*P*_{*t-*1}∥₂, *O*_{*t,t-*1}) *-* ∥*Pₜ* - *t*∥₂∥_{₁}, *t = med*(*Pₜ*) *- med*(*P*_{*t-*1}). Preferably, the consistency loss is computed bidirectionally, i.e. *L_{con}*(*t - 1, t) = L_{con}*(*t , t -* 1), ensuring that depth predictions remain stable over time while enabling accurate depth propagation across video sequences.

When several losses are considered, the final loss is the sum of all losses.

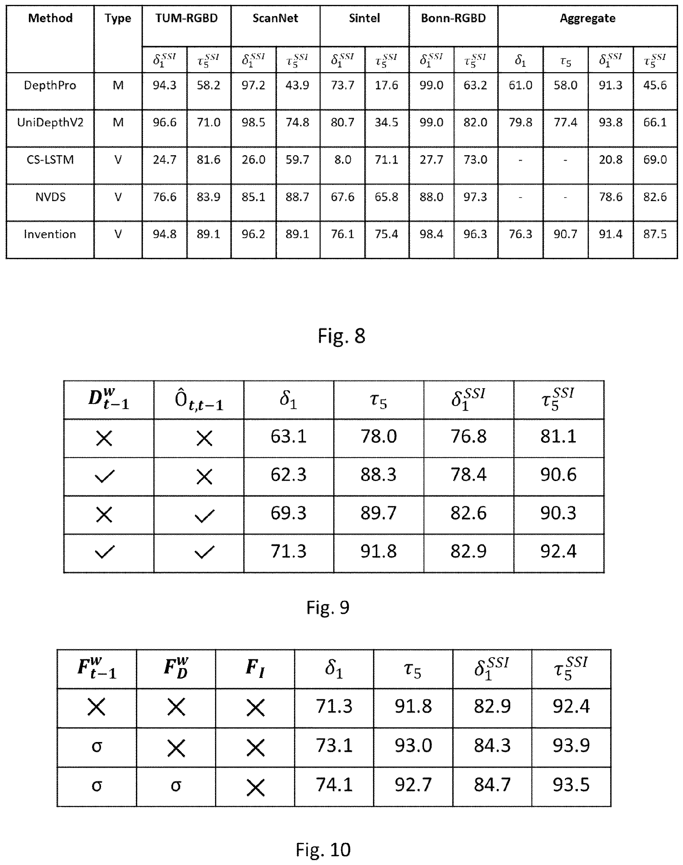

A particular example is described below from which performance analysis have been carried out and are detailed below with reference to Figures 8 to 12.
- the encoder-decoder model is as described in [REF3], the encoder producing four resolution depth features denoted *Fₜ* = {*F_{i,t}*}_{0≤*i*<4};
- the extraction module comprises a convolutional network as described in Zhuang Liu et al. "A convnet for the 2020s", Proceedings of the IEEE/CVF Conference on Computer Vision and Pattern Recognition (CVPR), pages 11976-11986, 2022, comprising in particular three input branches corresponding to each of the features F_{I} extracted from the current frame, the features F_{O} extracted from the optical flow estimation and the features F_{D}^{w} extracted from the warped depth predictions,
- the fusion module produces four-resolution fused extracted features, denoted *Ĉ* = {*Ĉᵢ*}_{0≤*i<*4}, the fusion *Ĉ* being performed as follows: $\hat{C} = {F}_{I} + {G}_{D} ⊙ {F}_{D}^{w} +$ *Lin*(*F_{O}*), where G_{D} is a gating mechanism, Lin refers to a linear layer, ⊙ represents elementwise multiplication, the gating mechanism being computed as *G_{D} = σLin*((*F_{O}*))*,* where σ indicates an activation function;
- the refining module comprises two convolutional layers interleaves with two bilinear up sampling and a leaky ReLU activation function;
- the residual module determines for each resolution *i* ∈ [0; 4[, *Cᵢ* = *Conv*(*Ĉᵢ*∥*F*_{*i,t-*1}, *σ*(*MLP*(*F_{O}*)), *with Conv a ResNet and σ*(*MLP*(.)) *an activation function.*

Depth predictions are 3D points maps.

Optical flow estimation is determined by using the method described in [REF6] when not provided by the datasets.

The encoder and decoder are initialized with the weight described in [REF3] and are frozen.

The propagation module as described in this example has been trained and compared to models of the state of the art, namely:

The models have been trained from two different data sets composed by well-known datasets:
1) one composed by
   - Kinectics-700:
   - Moments-in-Time:
   - Sav2:
2) the other composed by
   - TartanAir:
   - Wild-RGBD:
   - HabitatMatterport3D:
   - PointOdyssey:
   - Waymo:

The models are then evaluated by testing them on the following well-known datasets: ScanNet, Sintel, Bonn-RGBD, TUM-RGBD.

Evaluation of depth accuracy and consistency are assessed using δ₁ and τ₅ metrics respectively. δ₁ measures the percentage of pixels whose predicts depth is within the 25% of the ground truth depth and τ₅ measures consistency across frames by warping depth from one frame at an instant t-1 to the immediately successive frame at an instant t using optical flow, applying ego motion correction, and considering a pixel inlier when the difference is within the 5% of the depth at the instant t.

Results of comparing the example above with prior art models are synthetized Figure 8.

When per-frame depth predictions are rescaled to match ground truth depth for δ₁ or τ₅, we denote them as δ₁^{SSI} and τ₅^{SSI}. "-" indicates inability to produce metric output. The 'type' column indicates the task tackled (monocular (M) or video(V)).

Prior art models comprise: DepthPro ([REF1]), NVDS ([REF2]), UniDepthV2 ([REF3]) and CS-LSTM ([REF4]).

It is worth noting that we report mainly scale- and shift-invariant metrics to increase the extensiveness of our comparison, but the invention allows to output metric depth predictions.

In general, the invention demonstrates superior temporal consistency and computational efficiency compared to all state-of-the-art models.

In particular, when compared to a model with a similar runtime, such as CS-LSTM, the invention achieves significantly higher accuracy (+70.6%) and consistency (+18.5%).

Furthermore, when compared to the closest known model in terms of consistency, NVDS, the invention not only improves accuracy by 12.8%, but also provides a 6.7x improvement in inference speed.

In addition, the invention can produce metric depth predictions, in contrast to most video-based methods, and in the metric-case.

While monocular depth estimators generally yield higher absolute accuracy, this accuracy typically comes at the expense of temporal consistency. For instance, the invention notably surpasses the consistency of the monocular encoder-decoder model on which the invention is based, namely UniDepthV2, by 13.3% and 21.4% for metric and affine invariant evaluation, respectively, highlighting the strength of the propagation method.

Based on the previously described example of embodiment ablation analysis have been performed, highlighting in particular the advantages of optional features of the invention.

### Extracted features

The results in Figure 9 highlight the advantages of the optional extracted features. Considering the features F_{D}^{w} extraction from warped depth prediction Dₜ₋₁^{w} (row 2) significantly enhances depth consistency. Considering the features F_{O} extracted from the optical flow estimation Ô_{t,t-1} further improves both consistency and accuracy by allowing the model to identify incorrect warped depth features of the previous frame. This enables targeted feature corrections while maintaining stability by setting the residual to zero in regions where depth estimates are already reliable. The best performance (row 4) is achieved when both features F_{D}^{w} extraction from warped depth prediction Dₜ₋₁^{w} and features F_{O} extracted from the optical flow estimation Ô_{t,t-1} are considered.

### Gating mechanisms

Figure 10 presents an analysis of the gating mechanisms applied at different steps in a propagation method of the invention. The most significant impact is observed when gating mechanism is applied to the warped depth features of the previous frame Fₜ₋₁^{w} (row 2), directly regulating whether residual corrections from the Propagation Module influence the next frame. This prevents the propagation from being implicitly biased to always predicting zeros, since for large parts of images correction is typically null and supervised to be null. Row 3 evaluates gating mechanism during the step of fusion of the extracted features, where gating features extracted from the warped depth prediction F_{D}^{w} of the previous frame slightly improves accuracy. However, this effect may be partially redundant, as gating depth features of the previous frame (row 2) already ensures that residuals are only applied when necessary.

### Optical flow estimation

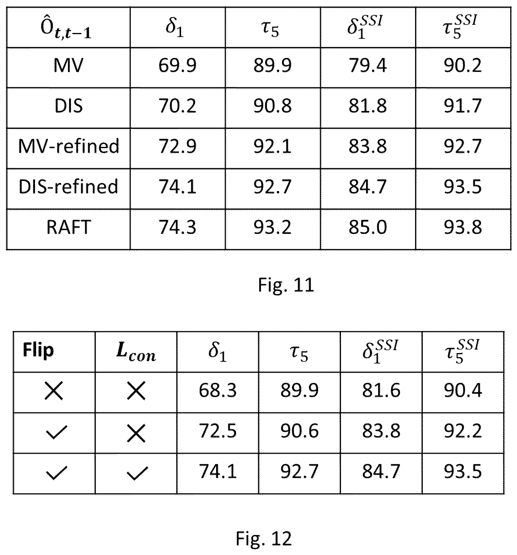

The effect of different methods to determine the optical flow estimation for is examined in Figure 11. The presence of a refining step is also examined. The tested methods include motion vectors (MV) extracted from MPEG-4 video encoding, DIS [REF2] flow, and SEA-RAFT [REF3] flow. Both MV and DIS optical flow estimations are tested directly and refined via convolutional layers, leading to refined versions MV_{R} and DIS_{R}. The results exhibit a diminishing return effect when increasing the quality of the optical flow Ô_{t,t-1}, indicating that beyond a certain threshold, further improvements in optical flow estimation yield smaller gains. Comparing row 1 to row 3 and row 2 to row 4, we observe that optical flow estimation refinement, despite its relatively low capacity, improves both accuracy and consistency. This suggests that the refining step effectively denoises the warping flow, leading to better propagation.

### Loss functions

Figure 12 presents ablation results on the training pipeline, focusing on temporal flip augmentation (row 2) and the loss function (row 3), namely *L_{con}*(*t -* 1, *t*) = ∥*w*(∥*P*_{*t*-1}∥₂, *O*_{*t,t-*1}) *-* ∥*Pₜ* - *t*∥₂∥_{₁},*t = med*(*Pₜ*) *- med*(*P*_{*t-*1}), where med() is the median over pixel and dimension-wise elements, P represents the 3D point map, and O_{t,t-1} represents the pseudo-ground truth flow from [REF3]. The results indicate that temporal flip augmentation enhances accuracy. The consistency loss *L_{con}* significantly improves both depth consistency and accuracy. By enforcing similarity between matching locations in consecutive frames, up to a translation, the loss provides an additional supervision signal that reinforces temporal stability.

Finally, it appears that the invention establishes an optimal trade-off between consistency, accuracy, and computational efficiency.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented depth-related information propagating method for depth estimation on video frames based on a predefined encoder-decoder model, the encoder (ENC) being configured to provide depth features from a frame, whereas the decoder (DEC) is configured to provide depth prediction from depth features as issued by the encoder, the method comprising the following steps:
a. An obtaining step comprising the obtention of at least:
- depth features (Fₜ₋₁) determined in relation with a previous frame (Iₜ₋₁) of a video frames;
- a current frame (It), which temporally follows the previous frame (Iₜ₋₁); and
- an optical flow estimation (Ô_{t,t-1}) which estimates relative motion between the previous frame (Iₜ₋₁) and the current frame (It);
b. A generating step comprising the generation of warped depth features (Fₜ₋₁^{w}) of the previous frame by applying a warping function to the depth features (Fₜ₋₁) of the previous frame using the optical flow estimation (Ô_{t,t-1});
c. An extracting step comprising the extraction of features (F_{I}) from at least the current frame (It);
d. A determining step comprising the determination of depth features (Ft) of the current frame (It) by correcting the warped depth features (Fₜ₋₁^{w}) of the previous frame using residual correction determined from the extracted features (F_{I}) and the depth features (Fₜ₋₁) of the previous frame in view of the optical flow estimation (Ô_{t,t-1}).

2. The propagating method of claim 1 further comprising a refining step of refining the optical flow estimation by using a light-weight convolutional network.

3. The propagating method of any of claims 1 or 2 further comprising an estimation step of determining depth prediction (Dt) of the current frame by providing depth features of the current frame to the decoder (DEC) of the predefined encoder-decoder model.

4. The propagating method of claim 3 wherein:
- the obtaining step also comprises the obtention of depth prediction (Dₜ₋₁) of the previous frame generated by providing the depth features (Fₜ₋₁) of the previous frame to the decoder (DEC) of the predefined encoder-decoder model;
- the generating step also comprises the generation of warped depth predictions (Dₜ₋₁^{w}) by applying the warping function to the depth prediction using the optical flow estimation (Ô_{t,t-1}), possibly refined; and
- the extracting step also comprises the extraction of features (F_{D}^{w}) from the warped depth prediction (Dₜ₋₁^{w}), the extracted features being a fusion of at least the features (F_{I}) extracted from the current frame and of the features (F_{D}^{w}) extracted from the depth prediction.

5. The propagating method of any of claims 3 or 4 wherein the depth prediction (Dt) of the current frame, and possibly of the previous frame, is metric depth prediction.

6. The propagating method of any of claims 1 to 5 wherein the depth features (Fₜ₋₁) of the previous frame are either obtained by submitting the previous frame (Iₜ₋₁) to the encoder (ENC) of the predefined encoder-decoder model or by applying the propagating method of any of claims 1 to 5 in which the previous frame corresponds to the current frame.

7. The propagating method of any of claims 1 to 6 wherein the extracting step also comprises extracting features (F_{O}) from the optical flow estimation, possibly refined, the extracted features being a fusion of at least the features (F_{I}) extracted from the current frame and of the features (F_{O}) extracted from the optical flow estimation, and, if applicable, of the features (F_{D}^{w}) extracted from the depth prediction, preferably the fusion being performed using a gating mechanism.

8. The propagating method of any of claims 1 to 7 wherein the depth features (Fₜ₋₁, Fₜ) are multi-resolution features, the method comprising encoding the extracted features so as to obtain multi-resolution extracted features, the determining step being applied to each resolution independently of each other.

9. The propagating method of any of claims 1 to 8 comprising a re-initializing step performed only when a condition based on the optical flow estimation, eventually refined, and on the warping function is met, the re-initializing step comprising recalculation of the depth features (Fₜ₋₁) of the previous frame, and, if applicable, of the depth prediction of the previous frame, by using the encoder (ENC) of the predefined encoder-decoder model.

10. A computer-implemented training method for a propagation module based on an already trained encoder-decoder model, the propagation module being configured to implement the propagating method of any of claims 1 to 9, the training method comprising the following steps:
- determining at least depth features of a first frame of a succession of frames over a temporal dimension by submitting the first frame to the encoder of the already trained encoder-decoder model;
- determining frame-wise depth features by submitting each frame of the succession of frames following the first frame to the propagation module;
- optionally, determining frame-wise depth predictions by submitting the frame-wise depth features to the decoder of the already trained encoder-decoder model;
- comparing frame-wise features with ground-truth frame-wise depth features, and optionally comparing frame-wise predictions with ground-truth frame-wise depth estimations;
- updating the propagation module based on said comparison(s).

11. The training method of claim 10 wherein frames are RGB frames and the already trained encoder-decoder model is a model that infers 3D points from RGB frame of video frames, the comparison further comprising computing a consistency loss based on metric radial distance between 3D points of each consecutive frames of the succession of frames.

12. The training method of any of claims 10 to 11 wherein temporal flip augmentation is performed on the succession of frames, the steps being performed on both the succession of frames and the temporal-flipped succession of frames.

13. An electronic device configured to implement a propagating method according to any one of claims 1 to 9 or a training method according to any one of claims 10 and 12.

14. A computer program set including instructions for executing the steps of the method of any one of claims 1 to 12 when said program set is executed by at least one computer.

15. A recording medium readable by at least one computer and having recorded thereon at least one computer program including instructions for executing the steps of the method of any one of claims 1 to 12.
